# FASCICULE DE BREVET EUROPEEN

(11) **EP 3 145 694 B1**
(45) Date de publication et mention de la délivrance du brevet: **20.02.2019**
(21) Numéro de dépôt: 15728067.8
(22) Date de dépôt: 19.05.2015
(51) Int. Cl.: B29C 65/14, B29C 65/48, B29D 99/00, B68G 7/05, B29C 33/38, B29C 65/50, B29L 31/58

(54) **PROCÉDÉ ET MACHINE DE COLLAGE D'UN REVÊTEMENT SOUPLE SUR UN SUPPORT UTILISANT DES ONDES ÉLECTROMAGNÉTIQUES**
VERFAHREN UND MASCHINE ZUM BINDEN EINER FLEXIBLEN BESCHICHTUNG AUF EINEM TRÄGER MIT ELEKTROMAGNETISCHEN WELLEN
METHOD AND MACHINE FOR BINDING A FLEXIBLE COATING TO A SUPPORT USING ELECTROMAGNETIC WAVES

(30) Priorité: 22.05.2014 FR 1454619
(43) Date de publication de la demande: 29.03.2017
(73) Titulaire: C-Gex System's, 82350 Albias (FR)
(72) Inventeur: GUILHEM, Christian, 82350 Albias (FR); GUILHEM, Marc, 82440 Mirabel (FR); GUILHEM, Jacques, 82000 Montauban (FR)
(74) Mandataire: Cabinet BARRE LAFORGUE & associés
(86) Numéro de dépôt international: PCT/FR2015/051310
(87) Numéro de publication internationale: WO 2015/177456

(56) Documents cités:
- EP-A1- 0 350 979
- WO-A2-2010/023394
- US-A- 5 254 197
- US-A- 5 407 510
- US-A1- 2004 226 648

## Description

L'invention concerne un procédé et une machine de collage d'un revêtement souple sur un support, lesdits procédés et machine utilisant une diffusion d'ondes électromagnétiques pour modifier l'état d'une colle placée entre deux surfaces à coller, par exemple pour le collage d'une housse en tissu ou en cuir sur un support constitué d'une armature et d'une forme en mousse afin de réaliser des garnitures de siège. L'invention s'étend également à une garniture obtenue selon ce procédé.

On connaît par exemple du document EP 0 350 979 un procédé et une machine d'habillage d'un objet faisant usage d'un lit de particules fluidisé par un flux de gaz chaud sur lequel on dépose une housse en tissu préalablement enduite de colle thermo-activable sur laquelle on applique le support à habiller. US 5407510 et WO 2010/023394 décrivent aussi différentes techniques de chauffage du lit fluidisé par un gaz chaud. L'utilisation de gaz chaud pour activer la colle s'est avéré être peu économique et peu ergonomique, le gaz chaud répandu augmentant la température du poste de travail et constituant un gaspillage d'énergie.

D'autres solutions ont été explorées, comme l'emploi d'ondes électromagnétiques de fréquence élevée. Le document US 5,254,197 décrit ainsi un procédé et une machine de collage d'un revêtement souple sur un support en mousse utilisant un flux de micro-ondes pour échauffer des gouttelettes d'eau faisant partie de la formulation de la colle ou bien dispersées sur ou sous une couche de colle. Dans ce document, le revêtement et un film de colle sont placés sur un moule de forme inerte aux micro-ondes et maintenus sur celui-ci par aspiration. Dans un premier mode de réalisation, un émetteur de micro-ondes est placé temporairement entre le support en mousse et le revêtement le temps de chauffer le film de colle puis l'émetteur est écarté et le support est pressé sur le film de colle. Ce mode de réalisation présente l'inconvénient de cesser le chauffage de la colle avant d'appliquer le support ce qui ne permet pas de maitriser la température de la colle au moment du pressage. Un deuxième mode de réalisation prévoit de presser le support sur le revêtement et le moule de forme, à l'intérieur d'un four à micro-ondes industriel, puis d'actionner des émetteurs de micro-ondes placés autour de l'ensemble. Dans ce cas, le maintien du revêtement et du film de colle par aspiration sur le moule de forme présente l'inconvénient d'aspirer l'eau dans le moule de forme et ne permet pas de gérer précisément la quantité de chaleur et donc l'efficacité du collage ainsi effectué. En outre, la nébulisation d'une quantité d'eau suffisante pour compenser cette aspiration ou l'utilisation d'une colle comportant une grande quantité d'eau peut endommager certaines matières du revêtement à coller (par exemple le cuir). Dans tous les cas, ce procédé présente l'inconvénient d'utiliser un moule de forme perforé extrêmement onéreux pour chaque forme de produit à réaliser. US 2004/226648 décrit une technique d'activation d'une colle par émission d'ondes électromagnétiques.

La présente invention a pour but de proposer un procédé et une machine de collage d'un revêtement sur un support qui ne présente pas les inconvénients de la technique antérieure.

L'invention vise à fournir une telle machine qui permette d'améliorer la qualité de travail du personnel utilisant le procédé de collage.

L'invention vise également à proposer une telle machine et un procédé qui permette d'améliorer la productivité d'un poste de travail équipé de la machine selon l'invention et mettant en oeuvre le procédé.

L'invention vise encore une telle machine qui permette des économies d'énergie substantielles par rapport aux dispositifs à gaz chauds connus.

Pour ce faire, l'invention concerne une machine pour le thermocollage d'un revêtement souple sur un support, du type comprenant :
- une enceinte pour lit de particules fluidisé par un flux de gaz, comportant un répartiteur de gaz, une grille de diffusion, un lit de particules et une toile souple de couverture,
- un système d'alimentation en gaz,
- un organe de compression apte à presser le support sur le lit de particules, caractérisée en ce que
- le système d'alimentation en gaz comprend des moyens pour fournir un flux de gaz présentant un taux d'humidité relative compris entre 70% et 100%,
- l'enceinte comprend au moins un émetteur d'ondes électromagnétiques placé de sorte que les ondes soient orientées en direction de l'organe de compression.

Grâce à la combinaison d'un lit fluidifié au moyen d'un gaz humide qui permet de diffuser des molécules d'eau dans les différentes couches à coller et dans le lit fluidisé lui-même et d'un émetteur d'ondes électromagnétiques qui a pour propriété d'exciter les molécules d'eau et de générer une élévation de température, les inventeurs ont pu constater que l'élévation de température au niveau des couches de colle était obtenue très rapidement, en quelques secondes voire quelques dizaines de secondes à comparer avec des temps de l'ordre d'une à plusieurs minutes nécessaire dans un lit fluidisé à l'air chaud. Du fait de ces durées très brèves, le lit fluidisé reste à température ambiante ou devient légèrement tiède mais ne provoque plus la dispersion des quantités de chaleur dissipées en pure perte dans un lit fluidisé à l'air chaud. L'ambiance thermique du poste de travail en est donc grandement améliorée et le gaspillage d'énergie est réduit.

Avantageusement, chaque émetteur d'ondes comprend un générateur d'ondes électromagnétiques, un guide d'ondes et une antenne, ladite antenne étant placée sous le lit de particules et adaptée pour diffuser les ondes électromagnétiques dans un angle solide centré sur l'antenne et d'angle adapté pour intercepter le support. Ainsi, en fonction de la puissance nécessaire, il est possible de définir plusieurs agencements allant d'un générateur ou magnétron placé directement sous le lit de particules, par exemple dans la cavité du répartiteur de gaz, et émettant directement selon un axe vertical en direction de l'organe de compression jusqu'à une pluralité de générateurs reliés par des guides d'ondes à des antennes réparties au-dessous du lit de particules et orientées pour couvrir selon des angles d'orientation appropriés une surface du lit de particules correspondant à la surface du support. Un mode de réalisation préféré peut ainsi comprendre un magnétron connecté à quatre guides d'onde reliés à quatre antennes cornet placées aux quatre coins du lit de particules et interceptant chacune une surface correspondant à celle du support lorsqu'il est plaqué sur le lit de particules sous un angle différent.

Avantageusement, l'enceinte est englobée dans une enveloppe métallique adaptée pour contenir les ondes électromagnétiques à l'intérieur de l'enveloppe. Afin d'assurer la sécurité du personnel travaillant sur la machine ou à proximité, celle-ci est placée dans une enveloppe conductrice formant cage de Faraday afin d'éviter toute fuite d'ondes électromagnétiques. L'enveloppe peut être formée au moins pour partie de plaques de tôle conductrices (par exemple métalliques ou métallisées) ou de grilles ou grillage conducteur. Tous les éléments formant l'enveloppe sont reliés électriquement entre eux et à la terre.

Avantageusement, l'enveloppe comprend une porte adaptée pour permettre l'introduction du revêtement souple et du support à l'intérieur de l'enceinte. L'enveloppe peut ainsi comporter une porte coulissante dite à guillotine, également réalisée en matériau conducteur, permettant d'accéder à la surface du lit de particules et à l'organe de compression afin d'installer le revêtement à coller sur le lit de particules et le support sur l'organe de compression. Cette porte comprend avantageusement un dispositif de sécurité interdisant l'alimentation du ou des générateurs d'ondes électromagnétiques tant qu'elle n'est pas fermée.

Avantageusement, la machine comprend au moins un brasseur d'ondes à l'intérieur de l'enveloppe pour répartir les ondes électromagnétiques. L'utilisation d'un ou plusieurs brasseurs d'ondes à l'intérieur de l'enveloppe, préférentiellement installés sur la partie supérieure de celle-ci, permet de renvoyer les ondes électromagnétiques en direction du lit de particules de manière à éliminer d'éventuelles "zones d'ombre" qui pourraient nuire à un collage régulier du revêtement sur le support.

L'invention s'étend également à un procédé de thermocollage d'un revêtement souple sur un support, du type mettant en oeuvre une machine présentant l'une quelconque des caractéristiques précitées, et tel que défini par la revendication 6.

Grâce à l'utilisation d'un gaz humide pour fluidifier le lit de particules, celui-ci présente une fluidité moins importante (par rapport à la fluidité obtenue avec de l'air sec) permettant dans un premier temps, lorsqu'on applique l'organe de compression sur le lit de particules fluidifié, d'obtenir un meilleur placage du revêtement et de la couche de colle sur le support. De plus, il suffit de diminuer le débit du gaz humide, par exemple de 10 m³ par minute à 2 m³ par minute pour figer le lit de particules et permettre d'exercer une pression importante sur l'empilage des couches. Les inventeurs ont en outre remarqué que la pression exercée sur l'empilage permettait une mise en température accélérée de la couche de colle pendant l'application des ondes électromagnétiques, entrainant le collage du revêtement sur le support. Cependant, dès l'arrêt de l'émission des ondes électromagnétiques, la couche de colle refroidit très rapidement grâce à la diffusion du gaz qui est à température ambiante, ce qui permet une prise rapide de la colle et un temps de cycle raccourci par rapport aux procédés de la technique antérieure utilisant un gaz chaud. La couche de colle est ainsi activée pendant et uniquement pendant l'émission des ondes électromagnétiques, soit pendant une durée de quelques secondes à quelques dizaines de secondes, en fonction de la puissance utilisée. On a pu mesurer qu'il suffisait d'une dizaine de secondes avec une puissance rayonnée de l'ordre de 800W à 1 kW pour réaliser un collage satisfaisant, ce qui représente une économie d'énergie considérable par rapport aux 6 kW consommés en permanence dans une machine de collage à gaz chaud qui ne permet qu'un temps de cycle de une à deux minutes par pièce fabriquée du fait des temps de refroidissement nécessaires.

Avantageusement, on utilise l'humidité du gaz pour humidifier la couche de colle afin de la rendre réactive aux ondes électromagnétiques. La circulation d'un gaz humide, vecteur de molécules d'eau, avant et pendant la première phase de pressage permet d'augmenter le taux d'humidité de la couche de colle et donc d'augmenter sa réactivité aux ondes électromagnétiques sans qu'il soit nécessaire de procéder à une aspersion supplémentaire au-dessous et au-dessus de la couche de colle, comme dans les procédés connus.

Avantageusement, le support utilisé comprend une couche de mousse, une couche de colle et une plaque de forme non assemblés et en ce que l'assemblage du support est réalisé simultanément avec le collage du revêtement sur le support. Grâce à l'utilisation d'ondes électromagnétiques qui pénètrent sans difficulté l'empilage pour chauffer directement la ou les couches de colle, on a constaté qu'il était maintenant possible de réaliser plusieurs collages simultanément, à l'inverse des procédés qui utilisent la conduction de la chaleur depuis la couche externe de revêtement. Il est ainsi possible de réaliser le support en collant une couche de mousse sur une plaque de forme (par exemple armature du dossier ou de l'assise d'un siège) rigide, en contreplaqué ou en matière synthétique, en même temps que le collage du revêtement sur l'autre face de la couche de mousse.

Avantageusement, on interpose en outre un feutre anti-feu et une couche de colle supplémentaire entre le revêtement et le support. De même, grâce à la pénétration des ondes électromagnétiques, il est possible de rajouter différentes couches permettant d'améliorer la fonctionnalité d'une garniture de siège, par exemple en rajoutant une couche de feutre anti-feu, sans augmenter de manière démesurée le coût de la garniture, les opérations supplémentaires de collage pouvant s'effectuer en temps masqué.

Il est également divulgué une garniture multicouche obtenue par un procédé tel qu'exposé ci-dessus qui comporte au moins une couche d'un revêtement non perméable. En effet, contrairement aux opérations de collage dans lesquelles le gaz chaud devait traverser les différentes couches pour porter la colle à une température permettant sa réactivation, la pénétration des ondes électromagnétiques permet d'interposer des couches de revêtement non perméables tels que du cuir, naturel ou synthétique, des revêtements en tissus enduit, et de réaliser des garnitures comportant de tels revêtements.

D'autres buts, caractéristiques et avantages de l'invention apparaîtront au vu de la description qui va suivre et des dessins annexés dans lesquels :
- les figures 1A et 1B sont des vues schématiques en coupe, de face, d'une machine selon l'invention, respectivement en position de chargement et en position de travail,
- la figure 2 est une vue de côté d'une machine selon l'invention, montrant son enveloppe de protection et la porte de celle-ci
- la figure 3 est une vue en coupe partielle d'une garniture selon l'invention.

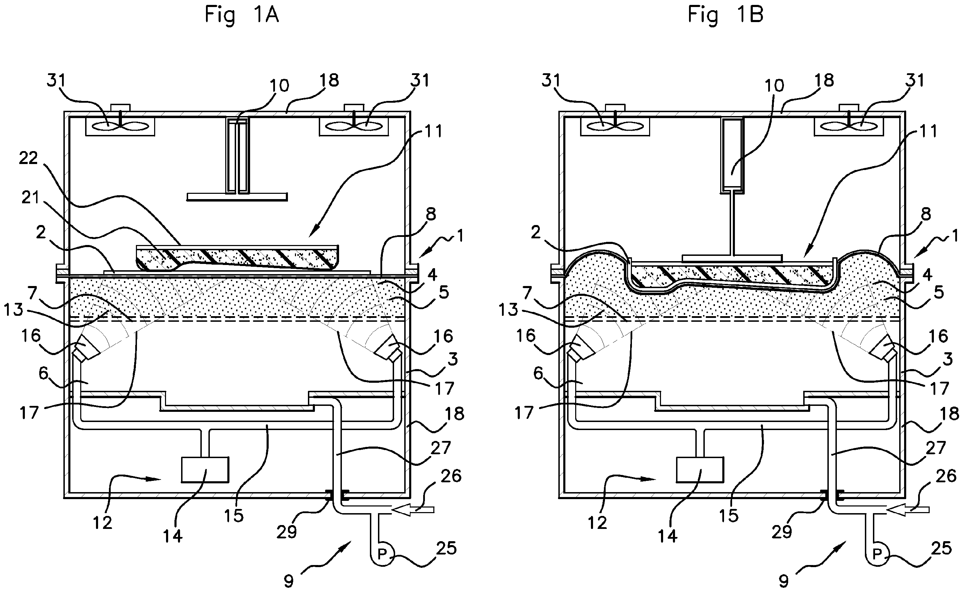

La machine 1 représentée à la figure 1A comporte une enceinte 3, de préférence métallique, dans laquelle sont agencés, de haut en bas, une toile 8 souple de couverture délimitant la partie supérieure d'un lit de particules 4 formé de microbilles 5 de verre. Ce lit de particules 4 repose sur une grille 7 de diffusion permettant le passage d'un gaz depuis un espace dit répartiteur 6 placé sous la grille 7 jusque dans le lit de particules 4 de manière à fluidifier ce lit de particules. Le répartiteur 6 est alimenté en gaz, de préférence par de l'air sous pression par un système d'alimentation en gaz comportant une pompe 25 reliée à une conduite 27 débouchant dans le répartiteur 6.

Le système d'alimentation en gaz comprend également une buse 26 de nébulisation d'eau sous haute pression permettant d'envoyer dans la conduite 27 un brouillard de fines gouttelettes d'eau. Ces gouttelettes d'eau se vaporisent instantanément et chargent d'humidité l'air envoyé par la pompe 25. De cette manière, le répartiteur 6 et le lit de particules 4 sont alimentés par de l'air humide. En fonction du débit d'air fourni par la pompe 25 et de la quantité d'eau nébulisée par la buse 26, l'humidité relative de l'air fourni au répartiteur peut être réglée par exemple entre 70% et 100%

Le débit d'air de la pompe 25 peut être également réglé par exemple entre un plein débit de l'ordre de 10 m³ par minute et un débit réduit de l'ordre de 2 m³ par minute, voire même un débit nul. Lorsque le lit de particules 4 est alimenté par un plein débit d'air humide, il se comporte comme un fluide, de préférence comme un fluide "boueux" présentant une viscosité de l'ordre de 2 à 10 Pa.s. Lorsque le lit de particules est alimenté en débit réduit ou lorsqu'il n'est pas alimenté, le lit de particules se solidifie et conserve une forme qui lui a été impartie à l'état fluide, comme représenté à la figure 1B.

Au-dessus de la toile 8 recouvrant le lit de particules 4, la machine comporte un organe de compression 10, en l'occurrence un vérin adapté pour presser un support 11 sur le lit de particules. Le support 11 forme par exemple l'assise ou le dossier d'un siège à revêtir par un revêtement souple, en tissu, cuir ou simili cuir, etc.

La machine 1 comprend également, dans son enceinte 3 au moins un émetteur 12 d'ondes électromagnétiques 13. Dans l'exemple représenté à la figure 1, l'émetteur 12 comprend un générateur d'ondes, par exemple un magnétron 14 auquel sont reliés un ou des guide(s) d'ondes 15 transportant les ondes électromagnétiques jusqu'à une ou plusieurs antennes 16, par exemple des antennes de type cornet. Les antennes 16 sont placées dans le répartiteur 6 et orientées de manière à ce que les ondes électromagnétiques soient orientées en direction de l'organe de compression 10, et plus particulièrement de façon à ce que les ondes électromagnétiques 13 soient diffusées selon un angle solide 17 centré sur chaque antenne et présentant un angle adapté pour intercepter le support 11. Les ondes électromagnétiques 13 ainsi émises présentent une longueur d'onde comprise entre 1 GHz et 300 GHz, dans le spectre généralement appelé micro-ondes, et plus particulièrement dans une bande de 2 à 10 GHz, adaptée pour échauffer les molécules d'eau et une puissance comprise entre 800W et 4 KW en fonction de l'utilisation précise (matériaux à coller, dimensions du support, etc.) de la machine.

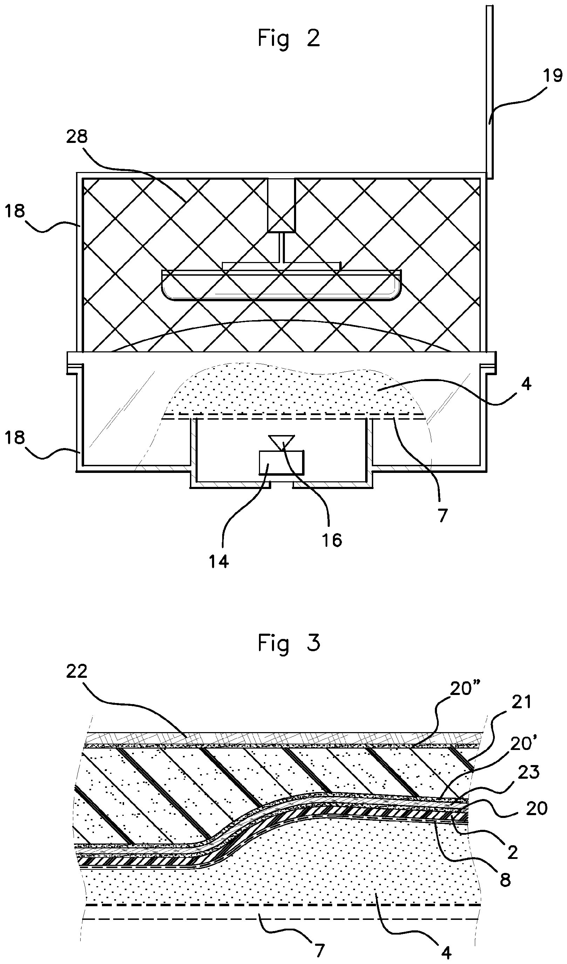

La machine 1 est complétée par une enveloppe 18 réalisée en matériau conducteur et refermant l'espace intérieur de la machine de manière à confiner les ondes électromagnétiques à l'intérieur de la machine et à assurer la protection des personnes se servant ou circulant autour de la machine. L'enveloppe 18 peut consister en un capot en tôles métalliques se refermant sur l'enceinte 3 également métallique, l'ensemble étant mis à la terre pour former une cage de Faraday, ou, comme représenté à la figure 2, par une enveloppe 18 formée d'un grillage 28 conducteur, de maille adaptée pour bloquer les ondes électromagnétiques utilisées, par exemple une maille de l'ordre du millimètre pour la gamme de fréquence de 2 à 10 GHz. Une porte 19, elle aussi grillagée de la même manière et montée coulissante (par exemple une porte à relevage dite "à guillotine") permet à l'opérateur d'accéder à l'intérieur de la machine pour disposer les différents éléments à coller sur la toile 8 du lit de particules 4 et/ou sur l'organe de compression 10. Les coulisses de la porte 19 sont adaptées, par exemple en utilisant un système de chicanes dites quart d'onde, pour éviter les fuites d'ondes électromagnétiques lorsque la porte est fermée. Des verrous et interrupteurs de sécurité sont également installés sur la porte 19 et/ou sur l'enveloppe 18 de manière à interrompre toute émission d'ondes électromagnétiques si la porte n'est pas correctement fermée. Lorsque des câbles ou des conduites comme la conduite 27 doivent traverser l'enceinte 3 ou l'enveloppe 18, des traversées 29 adaptées sont utilisées pour éviter les fuites d'ondes.

Un ou plusieurs brasseurs d'ondes 31 peuvent également être installés à l'intérieur de l'enveloppe 18 de manière à améliorer la répartition des ondes électromagnétiques 13 à l'intérieur de l'enveloppe 18.

Dans l'exemple représenté à la figure 2, l'émetteur d'ondes électromagnétiques est simplement réalisé par un seul magnétron 14 placé au centre de l'enceinte et comportant une antenne 16 dirigée vers le support monté sur l'organe de compression. D'autres variantes de réalisation de l'émetteur ou des émetteurs d'ondes électromagnétiques peuvent être envisagées en fonction des caractéristiques de la machine à obtenir, comme l'utilisation de plusieurs magnétrons de puissance moyenne (500W - 1KW) ou un magnétron de forte puissance (1 KW- 4KW) couplé à plusieurs antennes, par exemple quatre antennes placées aux quatre coins du répartiteur 6, etc.

On se réfère aux figures 1A, 1B et 3 pour décrire le procédé de collage permettant l'obtention d'une garniture simple (non représentée) ou d'une garniture 30 complexe telle que représentée sur la figure 3. Dans ce procédé, l'opérateur ouvre la porte 19 de la machine 1 et dispose sur la toile 8 du lit de particules 4 un premier revêtement 2, par exemple une pièce de tissu et plus particulièrement de tissu enduit ou de cuir comme représenté à la figure 1A. À cette étape, le système d'alimentation en gaz humide de la machine fonctionne à débit réduit et de l'air humide traverse le lit de particules, passe autour du revêtement 2 et dépose de l'humidité sur la face exposée de celui-ci. Le revêtement 2 peut avoir été préalablement recouvert d'une couche de colle 20 sur un poste de préparation annexe ou bien la couche de colle est déposée au moment du chargement de la machine, par exemple sous la forme d'un film sec prédécoupé à la dimension du revêtement 2. Le flux d'air humide régnant dans l'espace de travail interne de la machine est suffisant pour charger la couche de colle 20 en humidité.

Dans le mode d'exécution le plus simple du procédé, dans lequel on réalise une garniture simple avec un seul revêtement, l'opérateur installe ensuite le support 11 constitué d'une plaque de forme 22 sur laquelle est préalablement collée une couche de mousse 21 au-dessus du revêtement 2 et de la couche de colle 20. De manière alternative, l'opérateur peut installer le support 11 au bout de l'organe de compression 10. On active au moyen d'un tableau de commande (non représenté) le plein débit du flux de gaz humide et on commande la descente de l'organe de compression 10 de manière à presser le support 11 sur le revêtement 2 recouvert de la couche de colle 20. À noter que pendant cette descente, la couche de mousse 21 se charge également en humidité sur sa face externe. Le support 11, le revêtement 2 et la couche de colle 20 disposée entre eux sont enfoncés dans le lit de particules 4, alors à l'état fluide, de manière à ce que le revêtement 2 épouse la forme du support 11 comme représenté à la figure 1B. On modifie alors l'alimentation en gaz de manière à repasser en débit réduit, ou, de manière alternative, on coupe le flux de gaz de manière à solidifier le lit de particules 4. De préférence, on augmente l'effort appliqué par l'organe de compression 10 de manière à provoquer un écrasement de la couche de mousse 21 sur le revêtement 2 et la couche de colle 20.

L'ensemble des pièces étant ainsi immobilisé, l'opérateur referme la porte 19 de la machine, ce qui déclenche l'émetteur d'ondes électromagnétiques. Les ondes électromagnétiques 13 traversent le lit de particules 4, le revêtement 2 et la couche de colle 20 qu'elles échauffent par agitation des molécules d'eau présentes dans ou sur la couche de colle. Il suffit d'une émission de quelques dizaines de secondes pour que la colle atteigne son point de fusion et colle le revêtement 2 sur la couche de mousse 21. Après cette durée qui peut être programmée par un minuteur, l'émission d'ondes électromagnétiques est arrêtée et la colle refroidit très rapidement. En effet, il a été constaté que, quoique que le lit de particules soit chargé d'humidité, son échauffement propre est faible compte tenu de sa masse et il contribue à refroidir la couche de colle dès que les ondes électromagnétiques cessent de chauffer celle-ci. On a pu constater que ce phénomène permet de raccourcir les temps de cycle de collage comparativement à un lit fluidisé par air chaud qui nécessite un temps d'attente et de refroidissement important avant que la colle ne soit en état d'être manipulée.

Dès que la colle est suffisamment refroidie pour pouvoir être manipulée, ce qui est presque instantané, l'opérateur ouvre la porte 19 ce qui entraine la remontée de l'organe de compression et décharge le support revêtu. De manière optionnelle, l'organe de compression 10 peut être maintenu en position basse le temps que l'opérateur exécute quelques opérations complémentaires, telles que tirer sur une ganse ou un cordon de houssage circulant dans un ourlet préalablement disposé sur le pourtour du revêtement de manière à rabattre les bords libres du revêtement vers le centre du support et fixer, par collage ou agrafage les deux extrémités du cordon. Une fois ces opérations complémentaires effectuées, l'organe de compression 10 remonte et le support revêtu peut être déchargé.

Les inventeurs ont constaté que contrairement aux machines à air chaud où c'est la circulation de l'air dans les différentes couches et la conduction que cela entraine qui permet d'activer la colle, dans une machine selon l'invention, les ondes électromagnétiques ne sont pas arrêtées par un revêtement imperméable et traversent toute l'épaisseur de l'empilage des différentes couches. Il s'est donc avéré que ce procédé permet d'effectuer des collages multicouches en une seule opération, même si l'une des couches est non perméable à l'air.

Le procédé peut ainsi être utilisé pour réaliser une garniture 30 complexe comme représentée à la figure 3. Dans ce cas, à l'étape de chargement de la machine, l'opérateur dépose sur le lit de particules le revêtement 2 qui sera à l'extérieur de la garniture, la couche de colle 20, un éventuel feutre 23 anti-feu (ou toute autre couche de matériau souple permettant d'apporter une fonction technique, par exemple un film étanche), une deuxième couche de colle 20', la couche de mousse 21, une troisième couche de colle 20" puis la plaque de forme 22 formant l'ossature de la garniture. Les différentes couches sont ainsi empilées les unes sur les autres puis l'organe de compression est descendu de manière à exercer une pression sur la plaque 22. De même que précédemment, le flux de gaz humide est réduit ou interrompu pour solidifier le lit de particules, la porte 19 est fermée et l'émission d'ondes électromagnétiques est activée. Les ondes électromagnétiques 13 n'étant pas arrêtées par les différentes couches de la garniture, toutes les couches de colle 20, 20' et 20" sont activées simultanément. De même que pour le collage simple décrit précédemment, l'interruption de l'émission d'ondes entraine un refroidissement quasi instantané de l'ensemble des couches et la garniture 30 ainsi réalisée est presque immédiatement manipulable. Il suffit alors d'ouvrir la porte 19, de remonter l'organe de compression et de décharger une garniture réalisée en une seule opération.

Bien entendu, cette description est donnée à titre d'exemple illustratif uniquement et l'homme du métier pourra y apporter de nombreuses modifications sans sortir de la portée des revendications jointes, comme par exemple agencer la machine 1 de manière à placer le vérin à l'extérieur de l'enceinte 18 pour autant qu'une traversée antifuite d'ondes appropriée soit placée autour de la tige du vérin.

## Revendications

1. Machine (1) pour le thermocollage d'un revêtement (2) souple sur un support (11), du type comprenant :
- une enceinte (3) pour lit de particules (4) fluidisé par un flux de gaz, comportant un répartiteur (6) de gaz, une grille (7) de diffusion, un lit de particules (4) et une toile (8) souple de couverture,
- un système (25,27) d'alimentation en gaz,
- un organe (10) de compression apte à presser le support sur le lit de particules, **caractérisée en ce que**
- le système d'alimentation en gaz comprend des moyens (26) pour fournir un flux de gaz présentant un taux d'humidité relative compris entre 70% et 100%,
- l'enceinte comprend au moins un émetteur (12) d'ondes électromagnétiques (13) placé de sorte que les ondes soient orientées en direction de l'organe de compression.

2. Machine selon la revendication 1, **caractérisée en ce que** chaque émetteur (12) d'ondes comprend un générateur (14) d'ondes électromagnétiques, un guide d'ondes (15) et une antenne (16), ladite antenne étant placée sous le lit de particules (4) et adaptée pour diffuser les ondes électromagnétiques (13) dans un angle solide (17) centré sur l'antenne et d'angle adapté pour intercepter le support (11).

3. Machine selon l'une quelconque des revendications 1 ou 2, **caractérisée en ce que** l'enceinte (3) est englobée dans une enveloppe (18) métallique adaptée pour contenir les ondes électromagnétiques à l'intérieur de l'enveloppe.

4. Machine selon la revendication 3, **caractérisée en ce que** l'enveloppe (18) comprend une porte (19) adaptée pour permettre l'introduction du revêtement souple et du support à l'intérieur de l'enceinte.

5. Machine selon l'une quelconque des revendications 3 ou 4, **caractérisée en ce qu'**elle comprend au moins un brasseur d'ondes (31) à l'intérieur de l'enveloppe (18) pour répartir les ondes électromagnétiques (13).

6. Procédé de thermocollage d'un revêtement (2) souple sur un support (11), dans lequel on utilise un organe de compression (10) apte à presser le support sur un lit de particules (4) fluidisé par un flux de gaz généré par un système (25, 27) d'alimentation en gaz dans une enceinte (3) comportant un répartiteur (6) de gaz, une grille (7) de diffusion, un lit de particules (4) et une toile (8) souple de couverture, on empile au moins le revêtement, une couche de colle (20) et le support dans cet ordre sur la toile de couverture, on applique l'organe de compression sur le support afin de presser le support sur le revêtement, on modifie l'alimentation en gaz de manière à figer le lit de particules, procédé **caractérisé en ce que** :
- le procédé met en oeuvre une machine (1) selon l'une quelconque des revendications précédentes,
- on utilise un flux de gaz humide pour fluidifier le lit de particules,
- on déclenche un émetteur (12) d'ondes électromagnétiques (13) de manière à échauffer au moins la couche de colle,
- on maintient l'émission d'ondes pendant un temps prédéterminé adapté pour activer la couche de colle,
- on arrête l'émission d'ondes, on relève l'organe de compression et on décharge le support revêtu.

7. Procédé selon la revendication 6, **caractérisé en ce qu'**on utilise l'humidité du gaz pour humidifier la couche de colle (20) afin de la rendre réactive aux ondes électromagnétiques (13).

8. Procédé selon l'une quelconque des revendications 6 ou 7, **caractérisé en ce que** le support (11) utilisé comprend une couche de mousse (21), une couche de colle (20") et une plaque (21) de forme non assemblés et **en ce que** l'assemblage du support est réalisé simultanément avec le collage du revêtement (2) sur le support.

9. Procédé selon l'une quelconque des revendications 6 à 8, **caractérisé en ce qu'**on interpose en outre un feutre (23) anti-feu et une deuxième couche de colle (20') entre le revêtement (2) et le support (11).

## Patentansprüche

1. Maschine (1) zur Wärmeverklebung einer weichen Beschichtung (2) auf einem Träger (11) in der Art, Folgendes umfassend:
- einen abgeschlossenen Raum (3) für ein Partikelbett (4), das durch einen Gasstrom fluidisiert wird, einen Gasverteiler (6), ein Diffusionsgitter (7), ein Partikelbett (4) und ein weiches Abdecktuch (8) beinhaltend,
- ein Gasversorgungssystem (25, 27),
- ein Verdichtungselement (10), das imstande ist, den Träger auf dem Partikelbett zu pressen, **dadurch gekennzeichnet, dass**
- das Gasversorgungssystem Mittel (26) umfasst, um einen Gasstrom bereitzustellen, der einen relativen Feuchtigkeitsgehalt zwischen 70% und 100% aufweist,
- der abgeschlossene Raum mindestens einen Sender (12) elektromagnetischer Wellen (13) umfasst, der derart platziert ist, dass die Wellen in Richtung des Verdichtungselements ausgerichtet sind.

2. Maschine nach Anspruch 1, **dadurch gekennzeichnet, dass** jeder Sender (12) von Wellen einen Generator (14) elektromagnetischer Wellen, einen Wellenleiter (15) und eine Antenne (16) umfasst, wobei die Antenne unter dem Partikelbett (4) platziert ist und angepasst ist, um die elektromagnetischen Wellen (13) in einem festen auf der Antenne zentrierten Winkel (17) und einem Winkel zu diffundieren, der angepasst ist, um den Träger (11) zu kreuzen.

3. Maschine nach einem der Ansprüche 1 oder 2, **dadurch gekennzeichnet, dass** der abgeschlossene Raum (3) in eine metallische Hülle (18) einbezogen ist, die angepasst ist, um die elektromagnetischen Wellen im Inneren der Hülle zurückzuhalten.

4. Maschine nach Anspruch 3, **dadurch gekennzeichnet, dass** die Hülle (18) eine Tür (19) umfasst, die angepasst ist, um das Einführen der weichen Beschichtung und des Trägers in das Innere des abgeschlossenen Raumes zu ermöglichen.

5. Maschine nach einem der Ansprüche 3 oder 4, **dadurch gekennzeichnet, dass** sie mindestens ein Feldverteilungselement (31) im Inneren der Hülle (18) umfasst, um die elektromagnetischen Wellen (13) zu verteilen.

6. Verfahren zur Wärmeverklebung einer weichen Beschichtung (2) auf einem Träger (11), bei dem man ein Verdichtungselement (10) verwendet, das imstande ist, den Träger auf einem durch einen Gasstrom fluidisierten Partikelbett (4) zu pressen, der durch ein Gasversorgungssystem (25, 27) in einem abgeschlossenen Raum (3) erzeugt wird, der einen Gasverteiler (6), ein Diffusionsgitter (7), ein Partikelbett (4) und ein weiches Abdecktuch (8) beinhaltet, man mindestens die Beschichtung, eine Kleberschicht (20) und den Träger in dieser Reihenfolge auf dem Abdecktuch stapelt, man das Verdichtungselement auf dem Träger anlegt, um den Träger auf der Beschichtung zu pressen, man die Gasversorgung derart modifiziert, um das Partikelbett zu erstrarren, wobei das Verfahren **dadurch gekennzeichnet ist, dass**:
- das Verfahren eine Maschine (1) nach einem der vorstehenden Ansprüche verwendet,
- man einen feuchten Gasstrom verwendet, um das Partikelbett zu verflüssigen,
- man einen Sender (12) elektromagnetischer Wellen (13) derart auslöst, um mindestens die Kleberschicht zu erwärmen,
- man die Sendung von Wellen während einer vorbestimmten Zeit aufrechterhält, die angepasst ist, um die Kleberschicht zu aktivieren,
- man die Sendung von Wellen anhält, man das Verdichtungselement anhebt und man den beschichteten Träger entlädt.

7. Verfahren nach Anspruch 6, **dadurch gekennzeichnet, dass** man die Feuchtigkeit des Gases zum Befeuchten der Kleberschicht (20) verwendet, um sie für elektromagnetische Wellen (13) reaktiv zu machen.

8. Verfahren nach einem der Ansprüche 6 oder 7, **dadurch gekennzeichnet, dass** der verwendete Träger (11) eine Schaumstoffschicht (21), eine Kleberschicht (20") und eine Platte (21) in nicht zusammengesetzter Form umfasst, und dadurch, dass die Zusammensetzung des Trägers gleichzeitig mit dem Kleben der Beschichtung (2) auf dem Träger durchgeführt wird.

9. Verfahren nach einem der Ansprüche 6 bis 8, **dadurch gekennzeichnet, dass** man weiter einen feuerfesten Filz (23) und eine zweite Kleberschicht (20') zwischen die Beschichtung (2) und den Träger (11) einsetzt.

## Claims

1. Machine (1) for the thermobonding of a flexible covering (2) to a support (11), of the type comprising:
- a housing (3) for a bed of particles (4) fluidised by a flow of gas, comprising a gas distributer (6), a diffusion grating (7), a bed of particles (4) and a flexible cover sheet (8),
- a gas supply system (25, 27),
- a compression member (10) suitable for pressing the support onto the bed of particles,
**characterised in that**
- the gas supply system comprises means (26) for supplying a gas flow having a relative level of humidity of between 70% and 100%,
- the housing comprises at least one emitter (12) of electromagnetic waves (13) placed so that the waves are oriented in the direction of the compression member.

2. Machine according to claim 1, **characterised in that** each wave emitter (12) has an electromagnetic wave generator (14), a waveguide (15) and an antenna (16), said antenna being placed under the bed of particles (4) and being suitable for diffusing the electromagnetic waves (13) through a solid angle (17) centred on the antenna and at an angle suitable for intercepting the support (11).

3. Machine according to either of claims 1 or 2, **characterised in that** the housing (3) is enclosed in a metal casing (18) suitable for containing the electromagnetic waves within the casing.

4. Machine according to claim 3, **characterised in that** the casing (18) comprises a door (19) suitable for permitting the introduction of the flexible covering and of the support to the inside of the housing.

5. Machine according to either of claims 3 or 4, **characterised in that** it comprises at least one wave stirrer (31) inside the casing (18) to distribute the electromagnetic waves (13).

6. Method for thermobonding a flexible covering (2) onto a support (11), using a compression member (10) able to press the support onto a bed of particles (4) fluidised by a flow of gas generated by a system (25, 27) for supplying gas into a housing (3) comprising a gas distributer (6), a diffusion grating (7), a bed of particles (4) and a flexible cover sheet (8), at least the covering, an adhesive layer (20) and the support are stacked in this order on the cover sheet, the compression member is applied onto the support in order to press the support onto the covering, the supply of gas is modified so as to consolidate the bed of particles, the method being **characterised in that**:
- the method uses a machine (1) according to any one of the preceding claims,
- a flow of wet gas is used to fluidise the bed of particles,
- an emitter (12) of electromagnetic waves (13) is triggered so as to heat at least the adhesive layer,
- the emission of waves is maintained for a predetermined time suitable for activating the adhesive layer,
- the emission of waves is stopped, the compression member is raised and the covered support is discharged.

7. Method according to claim 6, **characterised in that** the humidity of the gas is used to wet the adhesive layer (20) in order to render it reactive to the electromagnetic waves (13).

8. Method according to either of claims 6 or 7, **characterised in that** the support (11) used comprises a foam layer (21), an adhesive layer (20") and a shaped plate (21), these items not being assembled, and **in that** the assembly of the support is carried out simultaneously with the bonding of the covering (2) to the support.

9. Method according to any one of claims 6 to 8, **characterised in that** a fire-resistant felt (23) and a second adhesive layer (20') are also interposed between the covering (2) and the support (11).
